# EUROPÄISCHE PATENTSCHRIFT

(11) **EP 1 784 283 B1**
(45) Veröffentlichungstag und Bekanntmachung des Hinweises auf die Patenterteilung: **30.09.2009**
(21) Anmeldenummer: 05783452.5
(22) Anmeldetag: 04.08.2005
(51) Int. Cl.: B25B 29/02

(54) **HYDRAULISCHE SCHRAUBENSPANNVORRICHTUNG**
HYDRAULIC SCREW CLAMPING DEVICE
DISPOSITIF HYDRAULIQUE DE SERRAGE DE VIS

(30) Priorität: 03.09.2004 DE 102004043146
(43) Veröffentlichungstag der Anmeldung: 16.05.2007
(73) Patentinhaber: Hohmann, Jörg, 59872 Meschede (DE); Hohmann, Frank, 59581 Warstein (DE)
(72) Erfinder: Hohmann, Jörg, 59872 Meschede (DE); Hohmann, Frank, 59581 Warstein (DE)
(74) Vertreter: Christophersen & Partner
(86) Internationale Anmeldenummer: PCT/EP2005/008458
(87) Internationale Veröffentlichungsnummer: WO 2006/027061

(56) Entgegenhaltungen:
- DE-A1- 2 130 507
- DE-A1- 2 328 444
- US-A- 4 314 690
- US-A- 4 565 111
- US-A- 5 025 541
- US-A- 5 046 386

## Beschreibung

Die Erfindung betrifft eine hydraulische Schraubenspannvorrichtung zum Anziehen und Lösen hochbelasteter Schrauben gemäß dem Oberbegriff des Unabhängigen Anspruch 1.

Eine derartige Schraubenspannvorrichtung ist in der US 5 025 541 A1 beschrieben.

Derartige Schraubenspannvorrichtungen haben die Aufgabe, eine genau vorgegebene Vorspannkraft auf eine Schraube aufzubringen, um die auf die Schraube aufgeschraubte Mutter anziehen oder lösen zu können. Hierzu wird die Wechselbuchse in der Schraubenspannvorrichtung auf das überstehende Gewindeende oberhalb der Mutter aufgeschraubt und danach die Schraubenspannvorrichtung unter hydraulischen Druck gesetzt. Wenn die vorgegebene Schraubendehnung erreicht ist, wird die auf das Gewindeende des Gewindebolzens aufgeschraubte Mutter bis zur Anlage an das Maschinenteil beigedreht.

Um das Aufschrauben der Wechselbuchse auf das Gewindeende des Gewindebolzens bei feststehenden Schraubenspannzylindern zu erleichtern, ist bei der Vorrichtung gemäß der CH 552 448 A der Kolben oben mit einem Vierkant- oder Sechskantansatz versehen. An diesen Vierkant- oder Sechskantansatz lässt sich ein Drehwerkzeug, beispielsweise in Form einer handbetätigten "Knarre" ansetzen, und der Kolben lässt sich bei feststehendem Gehäuse verdrehen und damit auf das Gewindeende aufschrauben bzw. davon abschrauben.

Nachdem der Gewindebolzen mit der gewünschten Kraft vorgespannt ist, wird die Mutter mit Hilfe eines Werkzeugs durch eine Öffnung im Zylinder nachgestellt, bis sie wieder satt auf dem Maschinenteil aufliegt.

Die Zeit zum Anziehen derartiger hochbelasteter Schraube ist sehr stark von den Nebenzeiten, d. h. dem Aufschrauben der Wechselbuchse auf das Gewindeende des Gewindebolzens sowie das Beistellen der Mutter abhängig.

In der US-A-5.025,541 ist eine Vorrichtung zum Schrauben und Losschrauben einer Mutter auf einem Schraubenbolzen und zum Schrauben und Losschrauben einer Wechselbuchse beschrieben, die unabhängig von für jede Schraubenverbindung vorgesehene, hydraulische Schraubenspannvorrichtungen zum Anziehen und Lösen hochbelasteter Schrauben an einem Flansch verfahrbar ist. Die Vorrichtung weist axial verschiebbare Zahnräder auf, die sich einerseits in den Bereich von an der Wechselbuchse und an der Mutter angeordneten Zahnkränzen einschwenken und sich andererseits wechselweise durch axiales Verschieben mit entweder den Zahnkranz an der Wechselbuchse oder dem Zahnkranz an der Mutter in Eingriff bringen lassen. Diese Vorrichtung zum Schrauben und Losschrauben einer Mutter und einer Wechselbuchse ist als Baueinheit ausgebildet, die sich nacheinander an eine Mehrzahl von anzuziehenden und lösenden Schraubverbindungen bewegen lässt. Der Antrieb der Zahnräder erfolgt durch einen Motor.

In der DE-A-23 28 444 ist des Weiteren ein kombiniertes elektro-pneumatischhydraulisches Schrauben-Anzugsgerät mit simultaner Zugkraft- und Drchmomentwirkung beschrieben. Dieses Gerät weist einen Antriebsmotor auf, der über ein Getriebe in Antriebsverbindung mit einer Wechselbuchse sowie über eine Verbindungswelle mit einer mit einer Mutter formschlüssig verbundenen Drehhülse steht. Die Antriebsverbindung zur Wechselbuchse lässt sich nach dem Aufschrauben der Wechselbuchse abkuppeln, so dass nur noch die Mutter durch den Antriebsmotor beigedreht wird, wenn der Schraubenbolzen, auf den die Mutter geschraubt ist, durch eine hydraulische Schraubenspannvorrichtung gelängt wird.

Der Erfindung liegt die Aufgabe zu Grunde, die Nebenzeiten bei der Benutzung einer hydraulischen Schraubenspannvorrichtung möglichst weitgehend zu verkürzten, wobei dies mit Hilfe einer möglichst einfach aufgebauten Vorrichtung erreicht werden soll, die die Möglichkeit bietet, die Wechselbuchse und/oder die Mutter sowohl handbetätigt als auch motorbetätigt aufzuschrauben.

Ausgehend von dieser Aufgabenstellung besteht die Erfindung bei einer hydraulischen Schraubenspannvorrichtung zum Anziehen und Lösen hochbelasteter Schrauben gemäß Anspruch 1 mit einem sich auf einem mittels eines Gewindebolzens und einer Mutter zu verspannenden Maschinenteil abstützenden Zylinder, wenigstens einem darin abgerichtet geführten, sich an einer an einem Gewindeende des Gewindebolzens aufgeschraubten Wechselbuchse abstützenden, periodisch druckbeaufschlagten Kolben, einem Druckmittelanschkus an der Schraubenspanavorrichtung und einer mit der Mutter formschlüssig verbundenen, im Zylinder angeordneten Drehhülse darin, dass ein mit der Drehhülse in Antriebsverbindung stehendes Getriebe, ein weiteres, mit der Wechselbuchse in Antriebsverbindung stehendes Getriebe, ein Antriebsmotor für die Getriebe, eine Verbindungswelle zwischen einem Zahnrad im Getriebe für die Wechselbuchse und einem Zahnrad im Getriebe für die Drehhülse, eine Einrichtung zur wechselweisen Kupplung des Antriebsmotors mit der Wechselbuchse oder mit der Drehhülse und jeweils ein Innensechskant oder -vierkant für den formschlüssigen Eingriff eines Drehwerkzeuges an einem an der Wechselbuchse befestigten Zahnrad und dem im Getriebe zum Antrieb der Verbindungswelle angeordneten Zahnrad, vorgesehen sind.

Die Getriebe lassen sich sehr einfach mit wenigen Zahnräder gestalten, und es ist nur ein Antriebsmotor für den Antrieb der Wechselbuchse und der Drehhülse erforderlich, der sich wechselweise mit der Wechselbuchse oder mit der Drehhülse kuppeln lässt, da die Wechselbuchse und die Drehhülse niemals gleichzeitig gedreht werden.

Des weiteren lässt sich die Wechselbuchse auf das Gewindeende des Gewindebolzens auch dann aufschrauben, wenn für den Antriebsmotor keine Antriebsenergie zur Verfügung steht oder das Drehmoment des Antriebsmotors, insbesondere zum Beidrehen der Mutter, nicht ausreicht, indem das an der Wechselbuchse befestigte Zahnrad uod/oder das im Getriebe zum Antrieb der Verbindungswelle angeordnete Zahnrad jeweils durch formschlüssigen Eingriff eines Drehwerkzeugs gedreht werden.

Diese Möglichkeit ist dann interessant, wenn sich die hydraulische Schraubenspannvorrichtung zwar mittels einer handbetätigten Hydraulikpumpe in Betrieb nehmen lässt, für den Antrieb des Antriebsmotors jedoch kein Elektroanschluss vorhanden ist.

Die Umschaltung kann in einfachster Weise aus einem von einem Eingriff mit einem Zahnrad in Eingriff mit der Wechselbuchse zu einer Antriebsverbindung mit dem Getriebe für die Drebhülse verschiebbaren Zahnrad bestehen. Dafür können Lagerzapfen am Zahnrad vorzugsweise in Langlöchern in einem Getriebegehäuseunter- und - oberteil verschiebbar angeordnet sein und lässt sich das Zahnrad mittels eines feststellbaren Betätigungshebels verschieben.

Mittels eines mit dem Antriebsmotor verbundenen Drehwinkelmessgeber lässt sich die im Eingriff befindliche Gewindelänge überprüfen sowie eine Aussage über die Längung des Gewindebolzens nach dem Spannen machen, ohne dass besondere Messvorrichtungen erforderlich sind.

Dieser Drehwinkelmessgeber kann an dem Antriebsmotor angebaut sein oder durch den Antriebsmotor selbst gebildet sein, wenn dieser als Schrittmotor ausgebildet ist, der dann gleichzeitig den Drehwinkelmessgeber bildet.

Vorzugsweise ist ein Motorschalter an der hydraulischen Schraubenspannvorrichtung angeordnet, der auch eine Umschaltung von Vorwärts auf Rückwärts zulässt.

Zusätzlich ist ein Automatikbetrieb für das Beidrehen der Mutter möglich, indem der Antriebsmotor mittels einer Fernbedienung eingeschaltet wird, wenn der Gewindebolzen auf Sollänge gedreht ist. Dies ist besonders wichtig, wenn beispielsweise alle Schrauben eines Reaktordruckbehälters gleichzeitig mittels einer entsprechenden Anzahl Schraubenspannvorrichtungen gespannt werden sollen. Um Fehlschaltungen zu vermeiden, kann beispielsweise am Betätigungshebel oder am verschiebbaren Zwischenzahnrad ein Endschalter angeordnet sein, der den Automatikbetrieb nur zulässt, wenn die Wechselbuchse ganz aufgeschraubt ist und das Zwischenzahnrad aus der Antriebsverbindung mit der Wechselbuchse gelöst ist.

Bevorzugterweise sind das Getriebe für die Wechselbuchse mit dem Antriebsmotor und der Verbindungswelle als unabhängige, an einer vorhandenen Schraubenspannvorrichtung nachrüstbare Baueinheit ausgebildet, die mit einem Sechskant- oder Vierkantfortsatz mit der Wechselbuchse und mit einem entsprechenden Sechskant- oder Vierkantfortsatz an der Verbindungswelle mit dem Getriebe für die Drehhülse kuppelbar ist.

Diese Baueinheit lässt sich an jede hydraulische Schraubenspannvorrichtung ansetzen, die an der Wechselbuchse eine entsprechende Sechskant - oder Vierkantausnehmung sowie auch an dem Getriebe für die Drehhülse aufweist. An der vorhandenen Schraubenspannvorrichtung brauchen dann nur noch Bohrungen für Befestigungsschrauben angebracht werden.

Selbstverständlich ist es auch möglich, hydraulische Schraubenspannvorrichtungen von vornherein mit der erwähnten Baueinheit auszustatten, die dann nur aus einem Antriebsmotor, der sich wechselweise mit einem mit der Wechselbuchse und der Drehhülse in Eingriff befindlichen Getriebe kuppeln lässt. In diesem Fall lässt sich eine die Schraubenspannvorrichtung nach oben abschließende Kappe direkt als Getriebegehäuse ausbilden, das nur noch mit einem einfachen Deckel geschlossen ist.

Die erfindungsgemäße Schraubenspannvorrichtung mit dem Drehantrieb für die Wechselbuchse und die Drehhülse baut äusserst kompakt und lässt sich auch bei beengten Raumverhältnissen problemlos einsetzen.

Die Erfindung wird nachstehend anhand eines in der Zeichnung dargestellten Ausführungsbeispiels des Näheren erläutert. In der Zeichnung zeigen
- Fig. 1: eine perspektivische Darstellung einer hydraulischen Schraubenspannvorrichtung mit einer Antriebseinheit für die Wechselbuchse und die Drehhülse,
- Fig. 2: eine Seitenansicht, teilweise im Schnitt der hydraulischen Schraubenspannvorrichtung gemäß Fig. **1****,**
- Fig. 3: eine Draufsicht auf die hydraulische Schraubenspannvorrichtung gemäß Fig. 1 und 2,
- Fig. 4: eine Draufsicht im Schnitt entlang der Linie IV - III in Fig. 2.

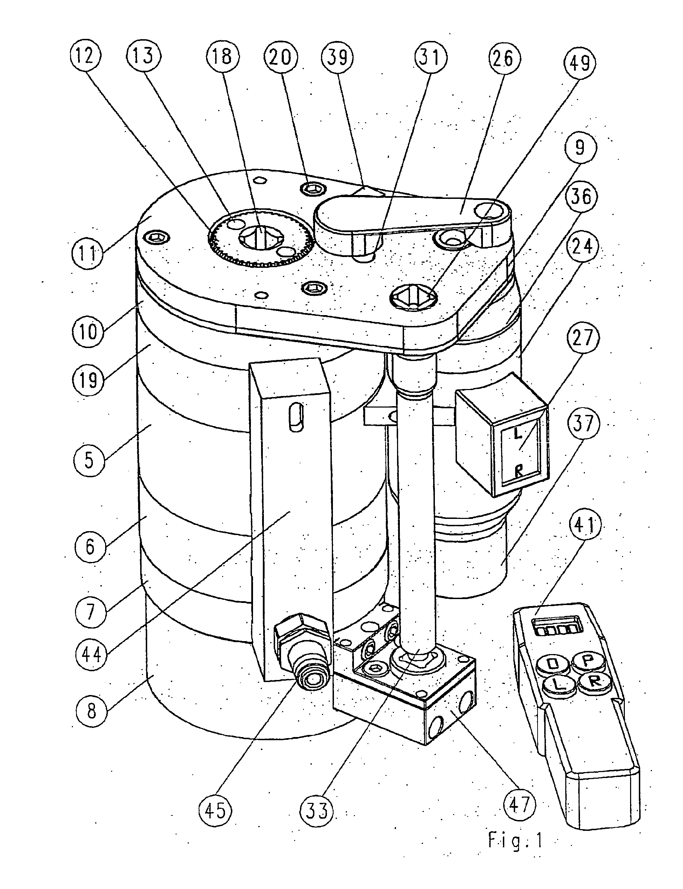

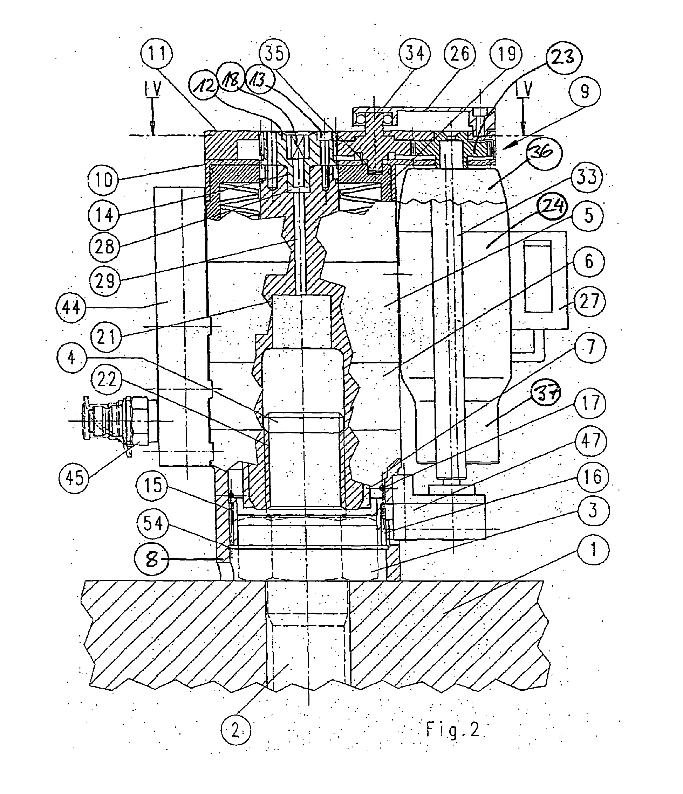

Aus der in Fig. 1 dargestellten perspektivischen Außenansicht und Fig. 2 ergibt sich eine hydraulische Schraubenspannvorrichtung, die aus Zylinderelementen 5, 6, 7, einem sich auf den zu spannenden Maschinenteil abstützenden Bereich 8 und einer Kappe 19 besteht. An die Zylinderelemente 5, 6, 7, in denen sich Hydraulikkolben abgedichtet bewegen, ist ein Druckmittelverteiler 44 angeschraubt, der mit einem Anschlussnippel 45 für einen Hochdruckschlauch versehen ist. Eine Wechselbuchse 21 wird durch die nicht dargestellten Hydraulikkolben bei Druckbeaufschlagung nach oben bewegt.

Auf die Kappe 19 ist ein Getriebe 9 aufgesetzt, das ein Getriebegehäuseuntereil 10 und ein Getriebegehäuseoberteil 11 aufweist und an der Kappe 19 mittels Schrauben 20 befestigt ist.

Die hydraulische Schraubenspannvorrichtung dient dazu, ein Maschinenteil 1 mittels eines Gewindebolzens 2 und einer Mutter 3 zu verspannen. Zu diesem Zweck wird zunächst die Mutter auf das Gewindeende 4 des Gewindebolzens 2 locker aufgeschraubt, wonach ein Gewindeteil 22 der Wechselbuchse 21 auf das noch über die Mutter 3 überstehende Gewindeende 4 aufgeschraubt wird. Im sich auf dem Maschinenteil 1 abstützenden Bereich 8 ist eine Drehhülse 15 angeordnet, die die Mutter 3 formschlüssig umgreift. Die Drehhülse 15 ist gegen Herausfallen aus dem sich auf dem Maschinenteil 1 abstützenden Bereich 8 mittels eines Seegerrings 54 geschützt. Eine Druckfeder 17 übt leichten Druck auf die Drehhülse 15 gegen den Seegerring 54 aus, wodurch die Drehhülse 15 beim Aufsetzen der hydraulischen Schraubenspannvorrichtung axial ausweichen kann, wenn der Innensechskant in der Drehhülse 15 nicht mit dem Außensechskant der Mutter 3 fluchtet.
An der Drehhülse 15 ist eine Außenverzahnung 16 angeordnet, die mit Zahnrädern in einem Getriebe 47 zusammenwirkt.

Die Wechselbuchse 21 ist an ihrem oberen Ende mit einer Sechskant- oder Vierkantausnehmung 28 versehen, in die ein Sechskant- oder Vierkantfortsatz 14 an einem Zahnrad 12 im Getriebe 9 eingreift. Dieses Zahnrad 12 ist mit der Wechselbuchse 21 mittels Befestigungsschrauben 13 verschraubt.

Das Zahnrad 12 weist seinerseits eine Sechskant- oder Vierkantausnehmung 18 auf, die in eine Axialbohrung 21 in der Wechselbuchse 21 übergeht.

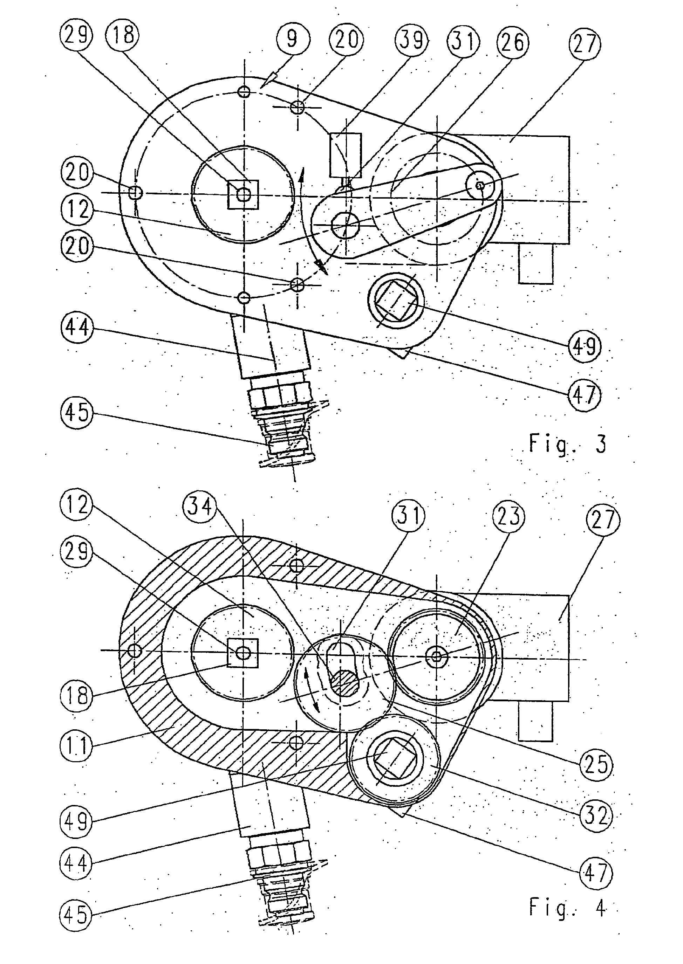

Am Getriebe 9 ist ein elektrischer Antriebsmotor 24 angeflanscht, der mit einem Zahnrad 23 gekuppelt ist. Dieses Zahnrad 23 steht in ständigem Eingriff mit einem verschiebbaren Zwischenrad 25, dessen Achsstummel 34, 35 in gebogenen Langlöchern 31 im Getriebegehäuseunterteil 10 und im Getriebegehäuseoberteil 11 geführt sind. Dieses verschiebbare Zwischenzahnrad 25 lässt sich mittels eines Betätigungshebels 26 so verschieben, dass es entweder, wie in Figur 4 dargestellt, mit einem Zahnrad 32 im Getriebe 9 oder mit dem mit der Wechselbuchse 21 verbundenen Zahnrad 12 in Antriebsverbindung steht. Zwischen dem Zahnrad 32 im Getriebe 9 und einem im Einzelnen nicht dargestellten Zahnrad im Getriebe 47 ist eine Verbindungswelle 33 angeordnet, so dass sich die Drehung des elektrischen Antriebsmotors 24 über das Zahnrad 32, das verschiebbare Zwischenzahnrad 25 und die Verbindungswelle 33 sowie über im Getriebe 47 angeordnete Zahnräder auf die Drehhülse 15 überträgt und sich die Mutter 3 auf diese Weise drehen lässt.

Wird das verschiebbare Zwischenzahnrad 25 in die Eingriffsstellung mit dem Zahnrad 12 gebracht, lässt sich die Wechselbuchse 21 mittels des elektrischen Antriebsmotors 24 auf das Gewindeende 4 des Gewindebolzens 2 bei stillstehenden Zylindern 5, 6, 7 ohne großen Kraftaufwand aufschrauben.

Auch das Zahnrad 32 im Getriebe 9 ist, wie das Zahnrad 12, mit einem Innensechskant oder Innenvierkant 49 versehen, so dass sich sowohl die Wechselbuchse 21 als auch die Drehhülse 15 mittels eines handbetriebenen Drehwerkzeugs drehen lassen, wenn keine elektrische Antriebsenergie zur Verfügung steht. Das handgetätigte Drehwerkzeug lässt sich auch dann einsetzen, wenn der Antriebsmotor 24 versagt oder eine durch den Antriebsmotor 24 nicht überwindbare Schwergängigkeit zwischen der Mutter 3 bzw. der Wechselbuchse 21 und dem Gewindebolzen 2 gegeben ist, die das Auf- bzw. Abschrauben mittels des Antriebsmotors verhindert.

Ein Motorschalter 27 dient dazu, den Antriebsmotor 24 ein- und auszuschalten sowie die Umschaltung für Rechts- und Linkslauf vorzunehmen. Auf diese Weise lassen sich sowohl das Anziehen als auch das Lösen von Schrauben mit großer Geschwindigkeit und ohne großen Kraftaufwand durchführen.

Der Motorschalter 27 lässt sich von einer Fernbedienung 41 ansteuern, die dazu dient, den Antriebsmotor 24 einzuschalten, wenn der Gewindebolzen 2 gedehnt ist, um die Mutter 3 beizudrehen. Um zu verhindern, dass der Antriebsmotor 24 eingeschaltet wird, wenn er noch in Antriebsverbindung mit der Wechselbuchse 21 steht, ist ein Endschalter 39 im Bereich des Betätigungshebels 26 angeordnet, der eine Verbindung zur Fernbedienung nur dann zulässt, wenn die Antriebsverbindung mit der Wechselbuchse 21 unterbrochen ist.

Zwischen dem Antriebsmotor 24 und dem Zahnrad 23 kann eine Rutschkupplung 36 angeordnet sein, um eine Beschädigung der Getriebeteile durch Überlastung auszuschließen. Diese Rutschkupplung 36 kann auch dazu dienen, die Mutter 3 mit einem vorgegebenen, niedrigen Drehmoment anzuziehen und währen des Dehnens des Gewindebolzens 2 mit diesem geringen Drehmoment beizudrehen, ohne dass dies die Schraubendehnung beeinflusst.

Am Antriebsmotor 24 kann eine Drehwinkelmessgeber 37 angeordnet sein. Mit Hilfe des Drchwinkelmessgebers 37 lässt sich die im Eingriff befindliche Gewindelänge überprüfen sowie eine Aussage bezüglich der Längung des Gewindebolzens 2 machen.

Wenn der Antriebsmotor 24 als elektrischer Schrittmotor ausgebildet ist, kann dieser direkt auch als Drehwinkelmessgeber dienen.

Das dargestellte Ausführungsbeispiel bezieht sich in erster Linie auf eine nachrüstbare Getriebeanordnung. Bei von vornherein konstruktiv mit dem erfindungsgemäßen Antrieb 9, 24 für die Wechselbuchse 21 und die Drehhülse 15 ausgestatteten Schraubenspannvorrichtungen lässt sich das Getriebe 9 im Deckelbereich der Kappe 19 anordnen und durch einen einfachen Getriebedeckel verschließen, ohne dass ein zusätzliches, aus einem Getriebegehäuseunterteil und einem Getriebegehäuseoberteil bestehendes Gehäuse angebracht werden muss.

## Patentansprüche

1. Hydraulische Schraubenspannvorrichtung zum Anziehen und Lösen hochbelasteter Schrauben mit
- einem sich auf einem mittels eines Gewindebolzens (2) und einer Mutter (3) zu verspannenden Maschinenteil (1) abstützenden Zylinder (5, 6, 7, 8),
- wenigstens einem darin abgedichtet geführten, sich an einer an einem Gewindeende (4) des Gewindebolzens (2) aufgeschraubten Wechselbuchse (21) abstützenden, periodisch druckbeaufschlagten Kolben,
- einem Dluckmittelanschluß (45) an der Schranbenspannvorrichtung, und
- einem mit der Wechselbuchse (21) in Antriebsverbindung stehenden Getriebe (9),
**dadurch gekennzeichnet, daß** die Schraubenspannvorrichtung auch mit
- einer mit der Mutter (3) formschlüssig verbundenen, im Zylinder (5, 6, 7, 8) angeordneten Drehhülse (15),
- einem mit der Drehhülse (15) in Antriebsverbindung (16) stehenden Getriebe (47),
- einem Antriebsmotor (24) für die Getriebe (9; 47),
- einer Verbindungswelle (33) zwischen einem Zahnrad (32) im Getriebe (9) für die Wechselbuchse (21) und einem Zahnrad im Getriebe (47) für die Drehhülse (15),
- einer Einrichtung (25) zur wechselweisen Kupplung des Antriebsmotors (24) mit der Wechselbuchse (21) oder mit der Drebhülse (15) und
- jeweils einen Innensechskant oder -vierkant (18, 49) für den formschlüssigen Eingriff eines Drehwerkzeugs an einem an der Wechselbuchse (21) befestigtes Zahnrad (12) und dem im Getriebe (9) angeordneten Zahnrad (42) zum Antrieb der Verbindungswelle (33), versehen ist.

2. Hydraulische Schraubenspannvorrichtung nach Anspruch 1, bei der die Umschaltung aus einem von einem Eingriff mit einem Zahnrad (12) im Eingriff mit der Wechselbuchse (21) zu einer Antriebsverbindung mit dem Getriebe (47) für die Drehhülse (15) verschiebbaren Zahnrad (25) besteht.

3. Hydraulische Scbraubenspannvorrichtung nach Anspruch 2, bei der Lagerzapfen (34, 35) am Zahnrad (25) in Langlöchern (31) in einem Getriebegehäuseunter- und oberteil (10, 11) verschiebbar angeordnet sind.

4. Hydraulische Schraubenspannvorrichtun nach Anspruch 3, bei der ein feststellbarer Betätigungshebel (26) für das Verschieben des Zahnrads (25) vorgesehen ist.

5. Hydraulische Schraubenspannvorrichtung nach einem der Ansprüche 1 bis 4, bei der ein Drehwinkelmessgeber (37) mit dem Antriebsmotor (24) verbundenen ist.

6. Hydraulische Schraubenspannvorrichtung nach einem der Ansprüche 1 bis 6, bei der der Antriebsmotor (24) als Schrittmotor ausgebildet ist und gleichzeitig den Drehwinkelmessgeber (37) bildet.

7. Hydraulische Schraubenspannvorrichtung nach einem der Ansprüche 1 bis 6, bei der ein Motorschalter (27) mit Umschaltung der Drehrichtung an der Vorrichtung angeordnet ist.

8. Hydraulische Schraubenspannvorrichtung nach einem der Ansprüche 1 bis 7, bei der das Getriebe (9) für die Wechselbuchse (21) mit dem Antriebsmotor (24) und der Verbindungswelle (33) als unabhängige, an einer vorhandenen Schraubenspannvorrichtung nachrüstbare Baueinheit ausgebildet ist, die mit einem Sechskant- oder Vierkantfortsatz (14) mit der Wechselbuchse (21) und mit einem entsprechenden Sechskant- oder Vierkantfortsatz an der Verbindungswelle (33) mit dem Getriebe (47) für die Drehhülse (15) kuppelbar ist.

9. Hydraulische Schraubenspannvorrichtung nach einem der Ansprüche 1,2, 4 bis 8, bei der eine den Zylinder (5, 6, 7, 8) nach oben abschließende Kappe (19) als Getriebegehäuse für das Getriebe (9) ausgebildet ist.

10. Hydraulische Schraubenspannvorrichtung nach einem der Ansprüche 1 bis 9, bei der ein die Stellung des verschiebbaren Zahnrades (25) aufnehmender Endschalter (39) vorgesehen ist, der eine Verbindung zu einer Fernsteuerung (41) nur bei Unterbrechung des Antriebsverbindung zur Wechselbuchse (21) zulässt.

## Claims

1. Hydraulic screw-tensioning device for the tightening and release of highly-loaded screws, with
- a cylinder (5, 6, 7, 8) supported on a machine part (1) to be braced by means of a threaded bolt (2) and a nut (3),
- at least one periodically pressure-loaded piston which is guided, sealed off, in the said cylinder and is supported on an exchangeable socket (21) screwed on a thread end (4) of the threaded bolt (2),
- pressure-medium connection (45) on the screw-tensioning device, and
- a gear (9) drive-connected to the exchangeable socket (21),
**characterized in that** the screw-tensioning device is also provided with
- a rotary sleeve (15) connected positively to the nut (3) and arranged in the cylinder (5, 6, 7, 8),
- a gear (47) drive-connected (16) to the rotary sleeve (15),
- a drive motor (24) for the gears (9; 47),
- a connecting shaft (33) between a gearwheel (32) in the gear (9) for the exchangeable socket (21) and a gearwheel in the gear (47) for the rotary sleeve (15),
- an arrangement (25) for the alternate coupling of the drive motor (24) to the exchangeable socket (21) or to the rotary sleeve (15), and
- in each case a hexagon or square socket (18, 49) for the positive engagement of a rotary tool on a gearwheel (12) fastened to the exchangeable socket (21) and on the gearwheel (42), arranged in the gear (9), for driving the connecting shaft (33).

2. Hydraulic screw-tensioning device according to Claim 1, in which the change-over consists of a gearwheel (25) displaceable from engagement with a gearwheel (12) in engagement with the exchangeable socket (21) to a drive connection to the gear (47) for the rotary sleeve (15).

3. Hydraulic screw-tensioning device according to Claim 2, in which bearing journals (34, 35) on the gearwheel (25) are arranged displaceably in long holes (31) in a gearcase lower and upper part (10, 11).

4. Hydraulic screw-tensioning device according to Claim 3, in which a lockable actuating lever (26) for the displacement of the gearwheel (25) is provided.

5. Hydraulic screw-tensioning device according to one of Claims 1 to 4, in which a rotary-angle measurement transducer (37) is connected to the drive motor (24).

6. Hydraulic screw-tensioning device according to one of Claims 1 to 6, in which the drive motor (24) is designed as a stepping motor and at the same time forms the rotary-angle measurement transducer (37).

7. Hydraulic screw-tensioning device according to one of Claims 1 to 6, in which a motor switch (27) with a change-over of the direction of rotation is arranged on the device.

8. Hydraulic screw-tensioning device according to one of Claims 1 to 7, in which the gear (9) for the exchangeable socket (21), together with the drive motor (24) and with the connecting shaft (33), is designed as an independent structural unit which can be retrofitted on an existing screw-tensioning device and which can be coupled by means of a hexagonal or square extension (14) to the exchangeable socket (21) and by means of a corresponding hexagonal or square extension on the connecting shaft (33) to the gear (47) for the rotary sleeve (15).

9. Hydraulic screw-tensioning device according to one of Claims 1, 2, 4 to 8, in which a cap (19) closing off the cylinder (5, 6, 7, 8) upwards is designed as a gearcase for the gear (9).

10. Hydraulic screw-tensioning device according to one of Claims 1 to 9, in which a limit switch (39) is provided which records the position of the displaceable gearwheel (25) and which allows a connection to a remote control (41) only when the drive connection to the exchangeable socket (21) is interrupted.

## Revendications

1. Dispositif hydraulique de serrage de vis pour visser et dévisser des vis fortement sollicitées, comprenant
- un cylindre (5, 6, 7, 8) s'appuyant sur une partie de machine (1) à serrer au moyen d'un boulon fileté (2) et d'un écrou (3),
- au moins un piston sollicité en pression périodiquement, guidé de manière hermétique dans celui-ci, s'appuyant contre une douille de changement (21) vissée à une extrémité filetée (4) du boulon fileté (2),
- un raccord de milieu sous pression (45) sur le dispositif de serrage de vis et
- un engrenage (9) en liaison d'entraînement avec la douille de changement (21),
**caractérisé en ce que** le dispositif de serrage de vis est également pourvu :
- d'un manchon rotatif (15) disposé dans le cylindre (5, 6, 7, 8) et connecté par engagement par correspondance géométrique avec l'écrou (3),
- d'un engrenage (47) en liaison d'entraînement (16) avec le manchon rotatif (15),
- d'un moteur d'entraînement (24) pour l'engrenage (9 ; 47),
- d'un arbre de connexion (33) entre une roue dentée (32) dans l'engrenage (9) pour la douille de changement (21) et une roue dentée dans l'engrenage (47) pour le manchon rotatif (15),
- d'un dispositif (25) pour l'accouplement alterné du moteur d'entraînement (24) à la douille de changement (21) ou au manchon rotatif (15) et
- d'une formation à six pans creux ou à quatre pans creux (18, 49) pour l'engagement par correspondance géométrique d'un outil rotatif sur une roue dentée (12) fixée sur la douille de changement (21) et sur la roue dentée (42) disposée dans l'engrenage (9) pour l'entraînement de l'arbre de connexion (33).

2. Dispositif hydraulique de serrage de vis selon la revendication 1, dans lequel la commutation se compose d'une roue dentée (25) déplaçable d'un engagement avec une roue dentée (12) en prise avec la douille de changement (21) dans une connexion d'entraînement avec l'engrenage (47) pour le manchon rotatif (15).

3. Dispositif hydraulique de serrage de vis selon la revendication 2, dans lequel des tourillons (34, 35) sont disposés de manière déplaçable sur la roue dentée (25) dans des trous oblongs (31) dans une partie inférieure et une partie supérieure du boîtier d'engrenage (10, 11).

4. Dispositif hydraulique de serrage de vis selon la revendication 3, dans lequel un levier d'actionnement pouvant être fixé (26) est prévu pour déplacer la roue dentée (25).

5. Dispositif hydraulique de serrage de vis selon l'une quelconque des revendications 1 à 4, dans lequel un capteur d'angle de rotation (37) est connecté au moteur d'entraînement (24).

6. Dispositif hydraulique de serrage de vis selon l'une quelconque des revendications 1 à 6, dans lequel le moteur d'entraînement (24) est réalisé sous forme de moteur pas à pas et forme simultanément le capteur d'angle de rotation (37).

7. Dispositif hydraulique de serrage de vis selon l'une quelconque des revendications 1 à 6, dans lequel un commutateur à moteur (27) est disposé sur le dispositif avec une inversion du sens de rotation.

8. Dispositif hydraulique de serrage de vis selon l'une quelconque des revendications 1 à 7, dans lequel l'engrenage (9) pour la douille de changement (21) est réalisé avec le moteur d'entraînement (24) et l'arbre de connexion (33) sous forme d'unité modulaire indépendante, pouvant être montée en rattrapage sur un dispositif de serrage de vis existant, qui peut être accouplée au moyen d'une saillie à six ou quatre pans (14) à la douille de changement (21) et au moyen d'une saillie correspondante à six ou quatre pans sur l'arbre de connexion (33) à l'engrenage (47) pour le manchon rotatif (15).

9. Dispositif hydraulique de serrage de vis selon l'une quelconque des revendications 1, 2, 4 à 8, dans lequel un capuchon (19) fermant le cylindre (5, 6, 7, 8) vers le haut est réalisé sous forme de boîtier d'engrenage pour l'engrenage (9).

10. Dispositif hydraulique de serrage de vis selon l'une quelconque des revendications 1 à 9, dans lequel un commutateur de fin de course (39) enregistrant la position de la roue dentée déplaçable (25) est prévu, et permet une connexion à une commande à distance (41) uniquement en cas d'interruption de la connexion d'entraînement à la douille de changement (21).
